Europäisches Patentamt

European Patent Office

Office européen des brevets

(11) Veröffentlichungsnummer: **0 504 637 A2**

## EUROPÄISCHE PATENTANMELDUNG

(21) Anmeldenummer: **92103333.8**

(22) Anmeldetag: **27.02.92**

(51) Int. Cl.5: **G01F 23/28**

(30) Priorität: **20.03.91 DE 4109091**

(43) Veröffentlichungstag der Anmeldung:
**23.09.92 Patentblatt 92/39**

(84) Benannte Vertragsstaaten:
**AT BE CH DE DK ES FR GB IT LI LU NL PT SE**

(71) Anmelder: **BEHRINGWERKE Aktiengesellschaft**
**Postfach 1140**
**W-3550 Marburg 1(DE)**

(72) Erfinder: **Breetz, Michael**
**Waldstrasse 1**
**W-6057 Dietzenbach/Steinberg(DE)**

(54) Vorrichtung zum Erkennen einer Flüssigkeitsoberfläche.

(57) Bei der Vorrichtung zum Erkennen einer Flüssigkeitsoberfläche (11) ist die Sendeantenne (6) mit einem Oszillator (1) verbunden, dem ein Verstärker (2) nachgeschaltet ist. Der Empfangsantenne (8) ist ein selektiver Verstärker (3), ein Schmittrigger (4) und ein Monoflop (5) nachgeschaltet.

EP 0 504 637 A2

In einem Analysensystem, z.B. einem Blutanalysensystem werden Proben und Reagenzien aus Vorratsgefäßen entnommen. Um Kontaminationen gering zu halten, ist zu gewährleisten, daß die Entnahmevorrichtung (Kanüle) nur geringfügig in die zu entnehmende Flüssigkeit eintaucht. Außerdem muß erkannt werden, daß noch Flüssigkeit vorhanden ist.

Zum Erkennen der Flüssigkeitsoberfläche werden die Flüssigkeiten mit ihren Gefäßen, die Ablage für die Gefäße und die Entnahmeeinrichtung als Teil einer Kondensatorschaltung benutzt. Die Entnahmeeinrichtung für die Flüssigkeit übernimmt dabei die Funktion einer Sendeantenne bzw. einer Elektrode des Kondensators, die Flüssigkeit die eines elektrischen Leiters, das Gefäß die des Dielektrikums und die Unterlage (Metallplatte) für das Gefäß die der Empfangsantenne bzw. die der Gegenelektrode des Kondensators. Es ist eine Vorrichtung bekannt, bei der die Sendeantenne mit einem Schwingkreis verbunden ist, der beim Eintauchen in die leitfähige Flüssigkeit verstimmt wird. Problematisch ist die erforderliche Arbeitsfrequenz von ca. 600 kHz. Es ist ferner eine Vorrichtung bekannt, die aus einer Sendeantenne und einer auf Masse gelegten Empfangsantenne besteht (kurzgeschlossener Kondensator). Diese Vorrichtung ist sehr störanfällig. Schon das Berühren der Sendeantenne durch die Haut des Handhabenden verursacht einen Kurzschluß. Bei einer weiteren bekannten Vorrichtung sendet die Sendeantenne Impulse bzw. Impulsfolgen, die von der Empfangsantenne einer Auswerteeinrichtung (Prozessor) zugeführt werden, die ihrerseits feststellt, ob ein Signal vorhanden ist oder nicht. Diese Vorrichtung ist nicht verstellbar. Sie reagiert sehr empfindlich auf die Position der Empfangsantenne und auf äußere Einflüsse. Hier will die Erfindung Abhilfe schaffen.

Die Aufgabe wird durch eine Vorrichtung gelöst, die aus einer Sendeantenne besteht, die mit einem Oszillator verbunden ist, dem ein Verstärker nachgeschaltet ist, sowie einer Empfangsantenne, der ein selektiver Verstärker, ein Schmittrigger und ein Monoflop nachgeschaltet ist.

Der Vorteil der Erfindung ist im wesentlichen darin zu sehen, daß bereits die Annäherung der Sendeantenne an die Oberfläche, d.h. das Absinken des Levels der Oberfläche feststellbar ist. Sie kann mit vergleichsweise niedriger Frequenz betrieben werden. Sendeantenne und Empfangsantenne sind vertauschbar. Ein Prozessor ist nicht erforderlich; die Anzeige erfolgt direkt.

Im folgenden wird die Vorrichtung anhand des Schaltbildes näher erläutert. Mit einem Oszillator 1 wird eine Rechteckspannung beliebiger Frequenz, z.B. von 10 kHz erzeugt, die mit einem Verstärker 2 zwischen 0 und 20 Volt eingestellt wird. Das aus dem Verstärker kommende Signal wird einer Sendeantenne 6, z.B. der Kanüle der Entnahmeeinrichtung zugeführt. Die eingetauchte Sendeantenne 6 mit der leitfähigen Flüssigkeit wirkt als Elektrode, das Gefäß 7 als Dielektrikum und die Empfangsantenne 8 als Gegenelektrode eines Kondensators. Dieser Kondensator ist durchlässig für die steilen Flanken der Rechteckspannung. Die von der Empfangsantenne 8 empfangenen Flanken werden durch einen selektiven Verstärker 3 verstärkt und mit einem Schmittrigger 4 in Rechtecksignale umgewandelt. Die Rechtecksignale werden durch eine Monoflop-Schaltung 5 in high low Signale umgesetzt und mit 10 direkt angezeigt. 9 deutet die Flüssigkeitsoberfläche an.

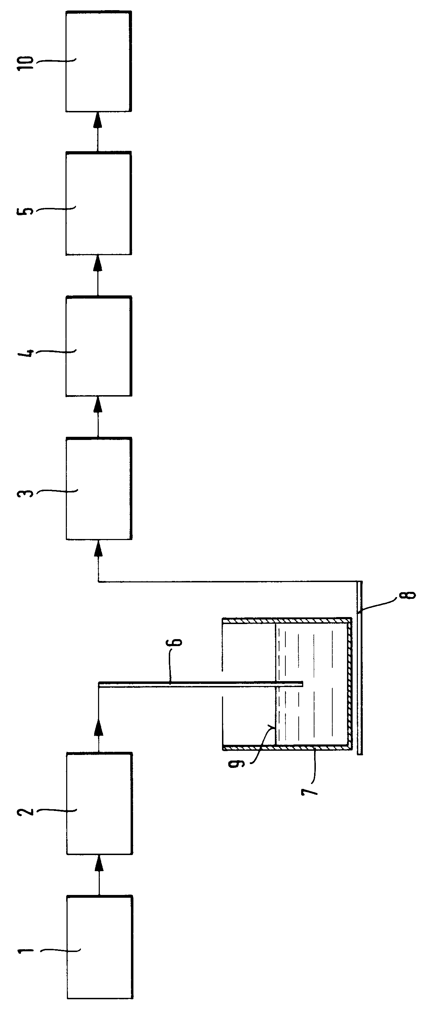

**Patentansprüche**

1. Vorrichtung zum Erkennen einer Flüssigkeitsoberfläche (11) bestehend aus einer mit einem Oszillator (1) verbundenen Sendeantenne (6), dem ein Verstärker (2) nachgeschaltet ist, sowie einer Empfangsantenne (8) der ein selektiver Verstärker (3), ein Schmittrigger (4) und ein Monoflop (5) nachgeschaltet ist.

**Patentanspruch für folgenden Vertragsstaat : ES**

1. Verfahren zum Erkennen einer Flüssigkeitsoberfläche (11) unter Verwendung einer Vorrichtung bestehend aus einer mit einem Oszillator (1) verbundenen Sendeantenne (6), dem ein Verstärker (2) nachgeschaltet ist, sowie einer Empfangsantenne (8) der ein selektiver Verstärker (3), ein Schmittrigger (4) und ein Monoflop (5) nachgeschaltet ist.